# EUROPEAN PATENT APPLICATION

(11) **EP 0 896 981 A1**
(43) Date of publication of application: **17.02.1999**
(21) Application number: 98902763.6
(22) Date of filing: 16.02.1998
(51) Int. Cl.: C08L 21/00, C08K 7/02, C08K 7/16, C08K 3/36, B60C 1/00

(54) **RUBBER COMPOSITION AND PNEUMATIC TIRES PRODUCED THEREFROM**

(30) Priority: 24.02.1997 JP 39126/97
(71) Applicant: THE YOKOHAMA RUBBER CO., LTD., Tokyo 105-8685 (JP)
(72) Inventor: KANENARI, Daisuke, The Yokohama Rubber Co. Ltd., Hiratsuka-shi, Kanagawa 254-8601 (JP); OGATA, Akio, The Yokohama Rubber Co. Ltd., Hiratsuka-shi, Kanagawa 254-8601 (JP)
(74) Representative: HOFFMANN - EITLE
(86) International application number: JP9800625
(87) International publication number: WO9837137

(57) **Abstract**

A rubber composition comprising 100 parts by weight of at least one rubber, 3 to 50 parts by weight of a polyvinyl alcohol containing an oxyalkylene group of the following formula in the form of particles having an average particle diameter of 20 to 1000 µm or staple fiber having an average length of 10 to 5000 µm and an aspect ratio (i.e., a ratio of fiber length/diameter) of 10 to 1000: 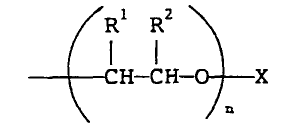 wherein R¹ and R² are hydrogen or an alkyl groups, X is hydrogen, an alkyl group, an alkyl ester group, an alkylamide group, or a sulfonate group and n is 1 to 300.

## Description

### TECHNICAL FIELD

The present invention relates to a rubber composition comprising a rubber and a specific water-soluble resin powder formulated thereinto. More particularly, since the resin powder is high in strength, high in water solubility, and high in melting point, when formulated into a rubber composition for studless tires (snow tires), it can give a rubber composition which exhibits a superior braking ability on ice and on snow.

### BACKGROUND ART

The demand for studless tires as tires for use when driving on ice and snow has been rapidly increasing recently. As studless tires which improve the traction of the studless tires on snow-covered road surfaces and iced-over road surfaces, which do not decline in performance due to long term use, and which can prevent damage to road surfaces, many tires have been proposed using foamed rubber with independent or continuous cells in the tread to increase the roughness of the tread surface and thereby improve the performance on ice. Foamed rubber, however, has the problem that, due to the low hardness of the rubber, in studless tires with fine siping cut into them, the insufficient rigidity of the blocks of the tread results in the blocks to collapse inward during driving causing a reduction in the area in contact with the ground and thereby a decline in the traction and decline in the steering stability. Further, Japanese Unexamined Patent Publication (Kokai) No. 3-159803 discloses a studless tire using tread rubber containing 3 to 25 parts by weight of a water-soluble polymer powder having an average particle diameter of 20 to 600 µm. This tire does not have cells in the tread, and therefore, the rubber does not decline in hardness. As the water-soluble polymer powder, however, a powder comprised of sodium carboxymethyl cellulose (CMC) or polyvinyl alcohol (PVA) is used. These resins generally either will not dissolve in water due to their structure or will dissolve in water extremely slowly. Since the resins take time to dissolve even when appearing at the tire surface, there is the problem that the µ on ice is conversely deteriorated due to the hard resin.

### DISCLOSURE OF THE INVENTION

Therefore, the object of the present invention is to provide a rubber composition which, by using a powder or staple fiber of a polyvinyl alcohol resin containing an oxyalkylene group having a specific structure formulated in a rubber composition for a cap compound of a studless pneumatic tire, exhibits the effect of the resin powder or staple fiber quickly dissolving due to the water on the ice or snow when appearing at the surface of the tread during driving and thereby forming a sticky layer with the road surface and the effect of the remaining holes performing the same action as cells to improve the traction on ice and snow and solves the problem of insufficient block rigidity caused by a reduction in hardness of the rubber as with foamed rubber.

According to the present invention, there is provided a rubber composition comprising 100 parts by weight of at least one rubber and 3 to 50 parts by weight of a polyvinyl alcohol resin containing an oxyalkylene group having the following formula in the form of particles having an average particle diameter of 20 to 1000 µm or staple fiber having an average length of 10 to 5000 µm and an aspect ratio (i.e., a ratio of fiber length/diameter) of 10 to 1000: 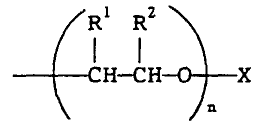 wherein R¹ and R² are hydrogen or an alkyl group, X is hydrogen, an alkyl group, an alkyl ester group, an alkylamide group, or a sulfonate group and n is 1 to 300.

Further, according to the present invention, there is provided a rubber composition comprising 100 parts by weight of at least one rubber and 3 to 50 parts by weight of a polyvinyl alcohol resin containing an oxyalkylene group having the following chemical formula in the form of particles having an average particle diameter of 20 to 1000 µm or staple fiber having an average length of 10 to 5000 µm and an aspect ratio (i.e., a ratio of fiber length/diameter) of 10 to 1000:

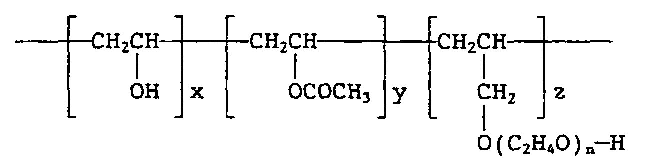

Further, according to the present invention, there is provided a rubber composition comprising 100 parts by weight of at least one rubber, 3 to 50 parts by weight of the same polyvinyl alcohol resin containing an oxyalkylene group as mentioned above, 5 to 50 parts by weight of silica, and 30 to 50 parts by weight of carbon black, and further 3 to 20% by weight, based on the silica, of a silane coupling agent.

Further, according to the present invention, there is provided a pneumatic tire using the rubber composition of the above formulation for a cap tread.

### BEST MODE FOR CARRYING OUT THE INVENTION

Below, an explanation will be given of the constitution and working-effect of the present invention. The specific oxyalkylene group-containing polyvinyl alcohol resin usable for the formulation in the rubber composition in the present invention has a high water solubility (i.e., water solubility of 1.0 µm/sec or more), high strength (i.e., P_{B} of 21 MPa or more), and high melting point (i.e., m.p. of 199°C or more), and therefore, if its powder (i.e., particles, micro filaments, etc.) is formulated in a tread rubber composition, will remain as particles in the rubber composition and the composition be vulcanized as it is. If the vulcanized rubber is used for the tread of a pneumatic tire, abrasion during driving will cause the powder of the water-soluble oxyalkylene group-containing polyvinyl alcohol resin to be exposed at the tire surface. This will quickly dissolve due to the melted water on a snow-covered road or icy road to form a sticky layer with the road surface. Further, the remaining pores will exhibit the same action as cells and tremendously increase the traction on the snow and ice. Note that this oxyalkylene group-containing polyvinyl alcohol resin is biodegradable, and therefore, will not pollute the environment even if it dissolves out onto the road surface.

Further, the water-soluble resin powder dissolves only after appearing on the surface of the tread rubber, and therefore, there is no reduction in hardness of the rubber as a whole as with the case of use of a foamed rubber. Further, since it has a high melting point, it will not melt while being mixed with the rubber composition. In addition, when it is used as the cap compound of a studless tire, even if the siping of the studless tire is increased, collapse of the blocks will be suppressed, the area of contact of the rubber and ice will be increased, and the traction will be increased by that amount.

The specific oxyalkylene group-containing polyvinyl alcohol resin usable for the formulation in a rubber composition in the present invention is a polyvinyl alcohol resin containing in its molecule an oxyalkylene group of the following formula giving water solubility, that is, a saponified copolymer of an ethylenic unsaturated monomer having an oxyalkylene group of the following formula and vinyl acetate: 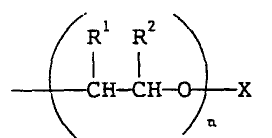 wherein, R¹ and R² are hydrogen or an alkyl group, in particular a methyl group or ethyl group, X is hydrogen, an alkyl group, an alkyl ester group, an alkylamine group, or a sulfonate group, and n is 1 to 300.

As specific examples of the ethylenic unsaturated monomer containing an oxyalkylene group, polyoxyethylene (meth)acrylate, polyoxypropylene (meth)acrylate, polyoxyethylene (meth)acrylamide, polyoxypropylene (meth)acrylamide, polyoxyethylene (1-(meth)acrylamide-1,1-dimethylpropyl)ester, polyoxyethylene (meth)allyl ether, polyoxypropylene (meth)allyl ether, polyoxyethylene vinyl ether, and polyoxypropylene vinyl ether may be mentioned. The n showing the number of moles added of the oxyalkylene units is 1 to 300 in all cases. In particular, an n of 5 to 50 is preferred. Of the above, polyoxyethylene allyl ether is practical.

The above oxyalkylene group-containing polyvinyl alcohol resin can be obtained by copolymerization of an ethylenic unsaturated monomer having the above oxyalkylene group and vinyl acetate, followed by saponifying the same. The saponification is carried out in the presence of an alkali catalyst with the copolymer dissolved in an alcohol. As the alcohol, methanol, ethanol, butanol, etc. may be used. The concentration of the copolymer in the alcohol is selected from a range of 20 to 50 wt%. As the saponification catalyst, sodium hydroxide, potassium hydroxide, sodium methylate, sodium ethylate, potassium ethylate, and other alkali metal hydroxides or alcoholates or another alkali catalyst must be used. The amount of the catalyst used must be made a 1 to 100 mmole equivalent with respect to the vinyl ester. Further, there is no problem even if an acid catalyst is used for the saponification. The saponification value of the vinyl acetate component is at least 70 mol%, preferably at least 75 mol%, more preferably at least 80 mol%, while the average degree of polymerization is 200 to 1000, preferably 250 to 900, more preferably 300 to 800.

The content of the oxyalkylene groups in the oxyalkylene group-containing polyvinyl alcohol resin obtained by saponification is preferably 5 to 20 wt%. If the content is less than 5 wt%, sufficient dissolution in water is not obtained, while if it is more than 20 wt%, the short term water resistance is insufficient (resulting in immediate dissolution due to humidity, wet hands, etc.), resulting in inferior handling.

Such an oxyalkylene group-containing polyvinyl alcohol resin is commercially available under the name of "ECOMATY AX" (product name) of Nippon Synthetic Chemical Industry. This resin has the following chemical formula and may be effectively used for the present invention:

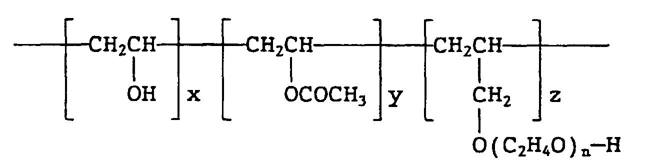

In formulating the above resin into the rubber composition, it is used as particles having an average particle diameter of 20 to 1000 µm or staple fiber having an average length of 10 to 5000 µm and an aspect ratio of 10 to 1000. Particles and staple fiber smaller than the prescribed values will fly off, melt due to humidity, or stick with each other making handling difficult, while particles and staple fiber larger than the prescribed values will be slow in speed of dissolution making it impossible for the traction to be exhibited and causing inferior abrasion resistance.

The particles and staple fibers are not particularly limited, but can be obtained by the methods of:
1. Pulverizing pelletized resin by a mill to particles of a predetermined particle size,
2. Heating the resin to its melting point or higher and spraying it in the air using a spray device to form particles of a predetermined particle size or staple fiber of a predetermined length and aspect ratio, and
3. Dissolving the resin in water, methanol, ethanol, or another solvent and spraying the solution in the air using a spray device to form particles of a predetermined particle size or staple fiber of a predetermined length and aspect ratio.

The rubber used for the substrate of the rubber composition of the present invention may be selected from any diene rubber generally formulated into various types of rubber compositions in the past, for example, natural rubber (NR), polyisoprene rubber (IR), various styrene-butadiene copolymer rubbers (SBR), various polybutadiene rubbers (BR), acrylonitrile-butadiene copolymer rubber (NBR), butyl rubber (IIR), halogenated butyl rubber (Cl-IIR, Br-IIR), ethylene-propylene copolymer rubber (EPM, EPDM), etc. These rubbers may be used alone or as any blend.

The rubber composition of the present invention uses the above oxyalkylene group-containing polyvinyl alcohol resin formulated in an amount of 3 to 50 parts by weight based on 100 parts by weight of the base rubber. When used in an amount in this range, the desired traction is exhibited. If the amount formulated is less than 3 parts by weight, the desired effects cannot be exhibited, further, when it is more than 50 parts by weight, the physical properties of the rubber deteriorate and there is also no further improvement in the traction.

The rubber composition of the present invention may further contain, with respect to 100 parts by weight of the rubber, 5 to 50 parts by weight of silica and 30 to 50 parts by weight of carbon black and may further contain 3 to 20% by weight of a silane coupling agent, based on the silica, so as to give a better rubber composition for a tread. Formulating the above silica enables the hardness of the rubber at low temperatures to be lowered and the traction on ice to be improved. Further, the addition of the silane coupling agent enables the hardness of the rubber at low temperatures to be lowered and the traction to be further improved.

As the silica and carbon black, materials used for ordinary tires may be used. Further, as the silane coupling agent, the compounds described in the following Table I and Table II may be used.

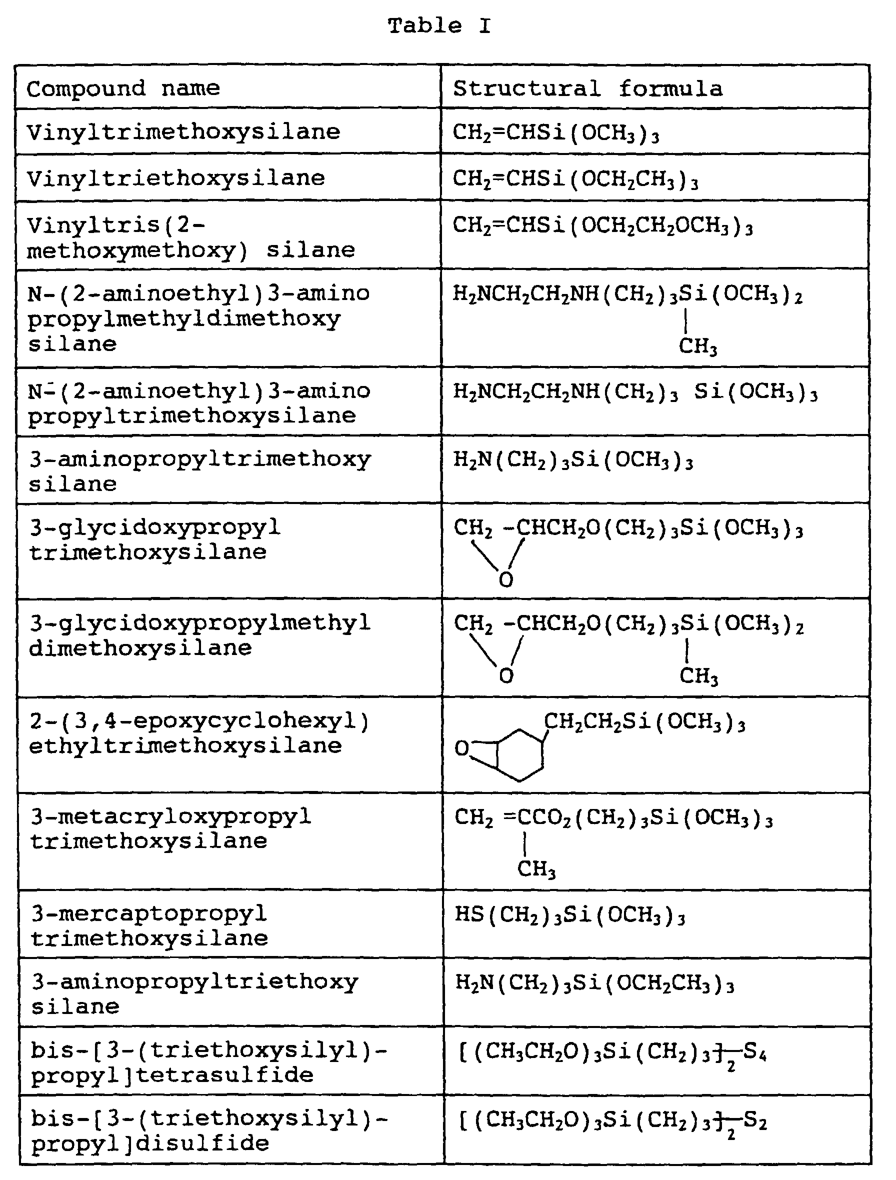

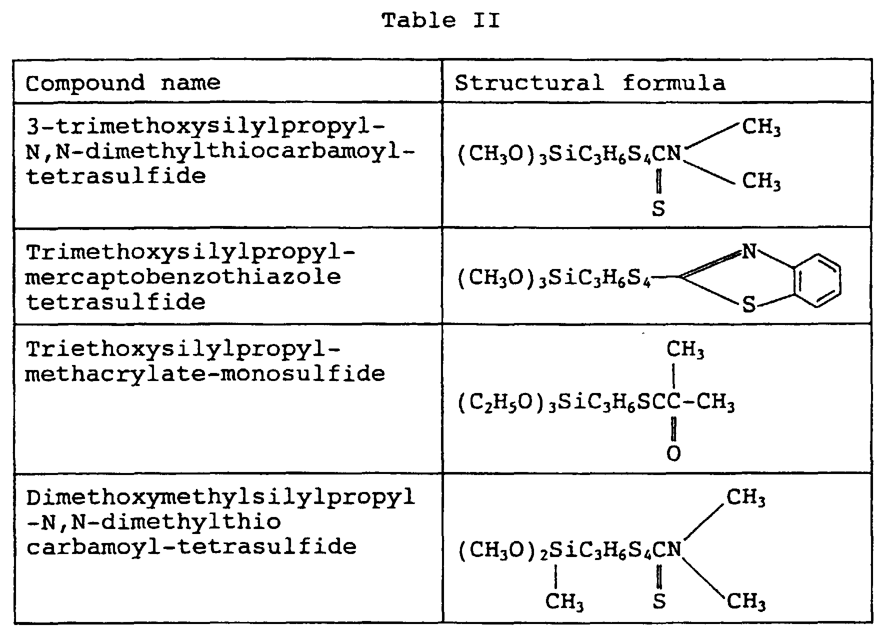

The rubber composition according to the present invention may further contain various additives generally formulated for general rubber use, for example, an ordinary vulcanizating or cross linking agent, a vulcanization or cross-linking accelerator, various types of oils, an antioxidant, a filler, a plasticizer, a softening agent, etc. The formulations may be kneaded and vulcanized by general methods used to form a composition and used for vulcanization or cross-linking. The amounts of these additives formulated may be the amounts generally formulated in the past so long as they do not run counter to the objects of the present invention.

### Examples

Below, the present invention will now be further explained by Examples and Comparative Examples, hut the invention is of course not limited to these Examples.

The following commercially available products were used for the formulating ingredients of the rubber compositions of the Examples and Comparative Examples:
NR: RSS#3
BR: Nipol BR 1220 (made by Nippon Zeon)
ISAF: Dia Black A (made by MITSUBISHI KAGAKU)
Silica: Nipsil AQ (made by Nippon Silica Kogyo)
ZnO: Zinc White No. 3 (made by Seido Kagaku)
Stearic acid: Lunac YA (made by Kao)
Antioxidant: Nocrac 6C (made by Ouchi Shinko Chemical Industry)
Wax: "Sannoc" (made by Ouchi Shinko Chemical Industry)
Aromatic oil: Process Oil X-140 (made by Kyodo Sekiyu)
Sulfur: oil treated sulfur
Vulcanizing accelerator: Nocceler NS (made by Ouchi Shinko Chemical Industry)
Foaming agent: Dinitrosopentamethylene tetramine (made by Eiwa Chemical Industry)
Modified PVA: ECOMATY AX-400TN (made by Nippon Synthetic Chemical Industry)
PVA: Gosenol GH-17 (made by Nippon Synthetic Chemical Industry)
Note that the letters assigned to the forms of the above PVA indicate the following:
   a: granular, average particle diameter 100 µm
   b: powder, average particle diameter 10 µm
   c: powder, average particle diameter 20 µm
   d: granular, average particle diameter 300 µm
   e: granular, average particle diameter 1200 µm
   f: staple fiber, average length 1000 µm, aspect ratio 120

The test methods of the vulcanized physical properties of the rubber compositions obtained in the examples were as follows:
(1) 100% M (100% modulus): Measured based on JIS K 6251
(2) T_{B} (tensile strength): Measured based on JIS K 6251
(3) E_{B} (elongation at break): Measured based on JIS K 6251
(4) JIS HS (hardness): Measured based on JIS K 6253
(5) Test of Actual Braking on Ice
   Tire size: 175/70R 13 (steel radial tire)
   Rim: 13 x 5J
   Air pressure: 200 kPa
   Vehicle: 1500 cc passenger car

The distance until stopping after braking from an initial speed of 40 km/h was measured. Note that the distance was shown as an index (against that of Comparative Example 1 as 100). The smaller the value, the better.

### [Conditions A]

The braking test was performed twice with no warmup driving and the average value was found.

Under these conditions, the added modified PVA particles do not sufficiently dissolve at the tread surface.

### [Conditions B}

The car was driven on ice for about 10 minutes as warmup, then the braking test was performed five times and the average value was found.

Under these conditions, the added modified PVA particles sufficiently dissolve or detach at the tread surface and a large number of small depressions are formed.
(6) Test of Actual Braking on Snow
   Tire size: 175/70R 13 (steel radial tire)
   Rim: 13 x 5J
   Air pressure: 200 kPa
   Vehicle: 1500 cc passenger car

The distance until stopping after braking from an initial speed of 40 km/h on a packed snow road surface at an air temperature of -11°C and a snow temperature of -9°C was measured. Note that the distance was shown as an index (against that of Comparative Example 1 as 100). The smaller the value, the better.
(7) Test of Feeling on Snow
   An overall judgement was made of the feeling when starting, accelerating, decelerating, braking, and turning under the same conditions as the above test of braking on snow. The following five rankings were given for the evaluation:

### Judgement

- A:: Superior
- B:: Somewhat superior
- C:: Ordinary
- D:: Somewhat inferior
- E:: Inferior

### Examples 1 to 9 and Comparative Examples 1 to 8

These examples show the results of evaluation of rubber compositions comprised of the specific oxyalkylene group-containing polyvinyl alcohol resin (modified PVA) of the present invention formulated in a diene rubber composition and rubber compositions and foamed rubber compositions comprised of the "polyvinyl alcohol (PVA)" of the prior art formulated in a diene rubber composition. The formulations and results are shown below in Table III.

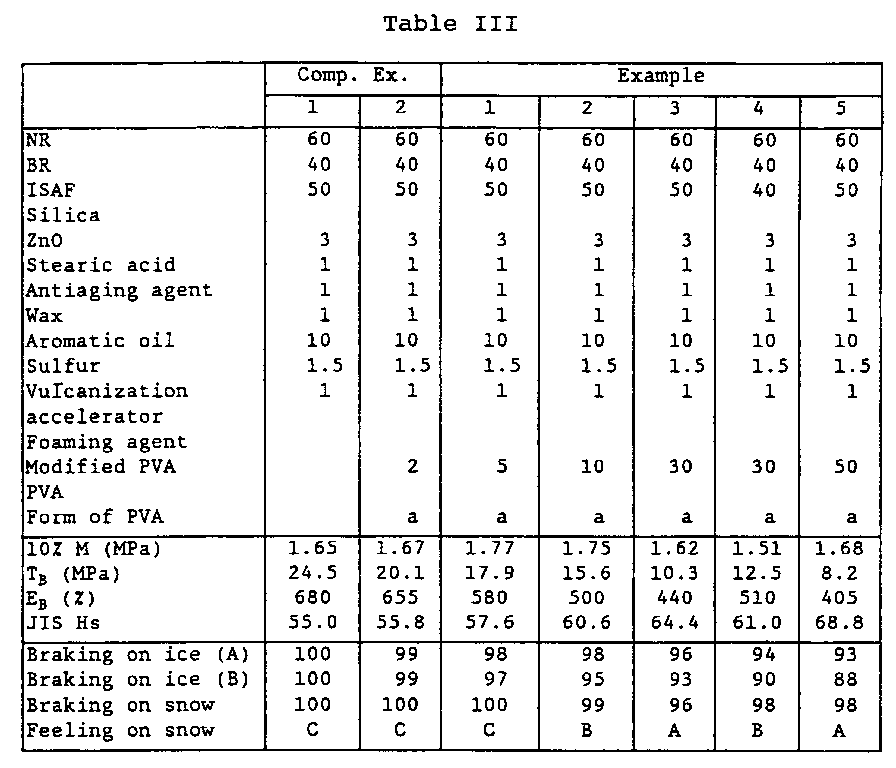

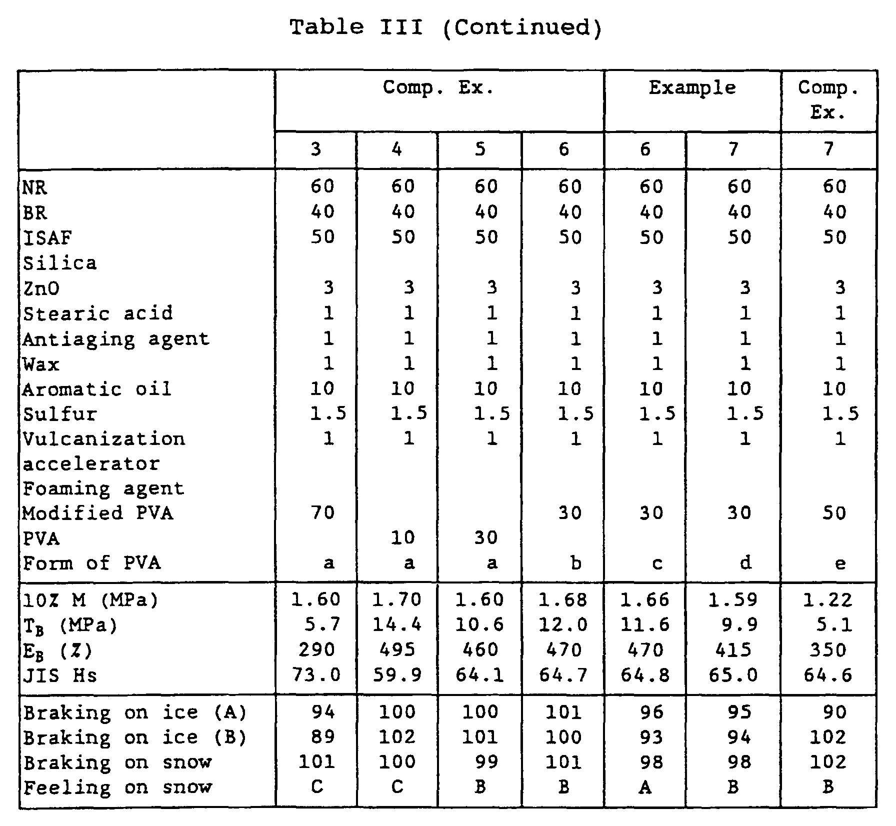

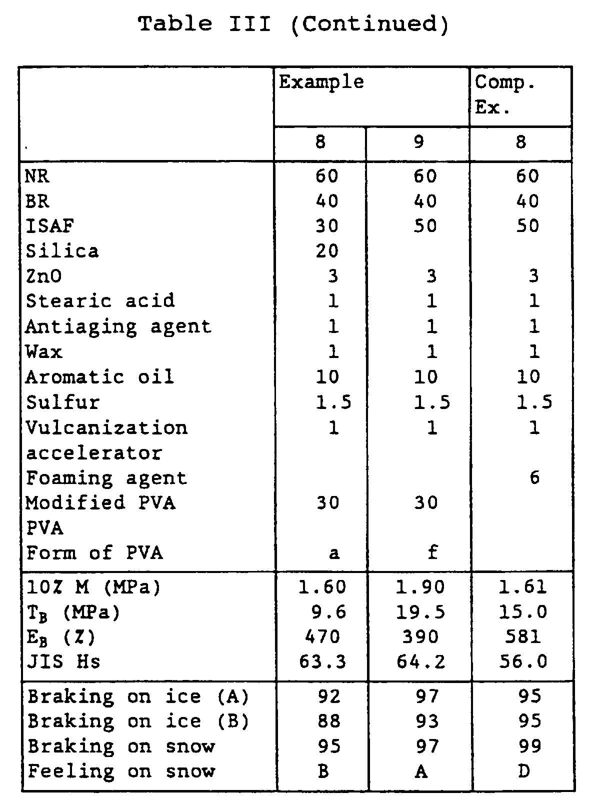

The following will be seen from the above Table III.

A comparison of the compositions of Examples 2 and 3 and the compositions of Comparative Examples 4 and 5 shows that the compositions in which modified PVA of the present invention is formulated is remarkably superior to compositions in which conventional PVA is formulated in both of the performance on ice and snow although there is no substantial difference in the mechanical properties.

Further, the composition using conventional foamed rubber (Comparative Example 8) exhibited similar performance on ice to the compositions in which modified PVA of the present invention is formulated, but exhibited a poor feeling on snow due to the insufficient block rigidity (JIS Hs).

Further, the composition in which modified PVA of the present invention is added to a rubber composition containing silica (Example 8) was found to be much more superior in performance on ice compared with a composition in which it is added to a rubber composition not containing silica (Example 3).

Further, the compositions in which modified PVA of the present invention is formulated in a range of a prescribed amount (Examples 1 to 9) all exhibited effects superior in terms of the performance on ice and snow, but compositions outside those prescribed amounts (Comparative Examples 2 and 3) exhibited inferior performance on ice due to insufficient or excessive rigidity.

Further, even compositions in which the modified PVA of the present invention were formulated in the prescribed amounts, when the form of the PVA deviated from the stipulation (Comparative Examples 6 and 7), exhibited poorer performance on both ice and snow.

### CAPABILITY OF UTILIZATION IN INDUSTRY

As explained above, according to the present invention, by formulating a predetermined oxyalkylene group-containing polyvinyl alcohol resin in a predetermined amount of a rubber composition, it is possible to obtain a rubber composition improved in performance on ice and snow. Accordingly, the rubber composition of the present invention is extremely useful for a tread rubber composition for a studless pneumatic tire.

## Claims

1. A rubber composition comprising 100 parts by weight of at least one rubber and 3 to 50 parts by weight of a polyvinyl alcohol resin, containing an oxyalkylene group having the following formula, in the form of particles having an average particle diameter of 20 to 1000 µm or staple fiber having an average length of 10 to 5000 µm and an aspect ratio (i.e., a ratio of fiber length/diameter) of 10 to 1000: 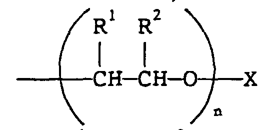 wherein R¹ and R² are hydrogen or an alkyl group, X is hydrogen, an alkyl group, an alkyl ester group, an alkylamide group, or a sulfonate group and n is 1 to 300.

2. A rubber composition as set forth in claim 1, wherein the polyvinyl alcohol containing an oxyalkylene group has the following chemical formula:

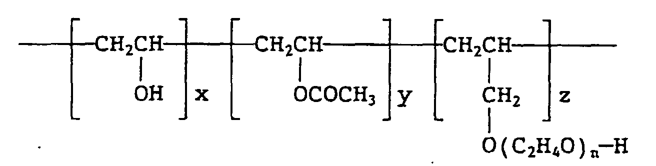

3. A rubber composition as set forth in claim 1 or 2, wherein the content of the oxyalkylene group in the polyvinyl alcohol resin containing an oxyalkylene group is 5 to 20% by weight.

4. A rubber composition as set forth in any one of claims 1 to 3 comprising 100 parts by weight of the rubber, 5 to 50 parts by weight of silica, 30 to 50 parts by weight of carbon black, and 3 to 20 % by weight, based on the silica, of a silane coupling agent.

5. A pneumatic tire using a rubber composition as set forth in any one of claims 1 to 4 for a cap tread.
